# EUROPEAN PATENT APPLICATION

(11) **EP 2 811 786 A1**
(43) Date of publication of application: **10.12.2014**
(21) Application number: 12867197.1
(22) Date of filing: 23.03.2012
(51) Int. Cl.: H04W 48/08

(54) **METHOD, SYSTEM, AND DEVICE FOR SENDING TRIGGERING INFORMATION**

(30) Priority: 03.02.2012 CN 201210024562
(71) Applicant: ZTE Corporation, Shenzhen, Guangdong 518057 (CN)
(72) Inventor: XU, Hui, Shenzhen Guangdong 518057 (CN)
(74) Representative: Gevers Patents
(86) International application number: PCT/CN2012/072952
(87) International publication number: WO 2013/113182

(57) **Abstract**

Disclosed is a method for sending a trigger message, including steps as follows: a Machine Type Communication InterWorking Function (MTC-IWF) authenticates a Machine Type Communication (MTC) server upon receiving a trigger message sent by the MTC server; obtains, after the MTC server is authenticated, an Internet Protocol (IP) address of an MTC User Equipment (UE); sends, when the IP address of the MTC UE is obtained, the trigger message to the MTC UE via a user plane network node equipment according to the obtained IP address of the MTC UE, or sends, when the IP address of the MTC UE is not obtained, the trigger message to the MTC UE via a control plane interface; and sends a trigger confirm message to the MTC server. The present disclosure also provides a system and equipment for sending a trigger message. With a technical solution according to the present disclosure, it is possible to send a trigger message.

## Description

### TECHNICAL FIELD

The present disclosure relates to the field of wireless communications, and in specific to a method, system and equipment for sending a trigger message.

### BACKGROUND

A term Machine to Machine (M2M) refers to all techniques and means for establishing a connection among machines. The concept of M2M has appeared in the 1990s, remaining a theory, however. After 2000, with the development of mobile communication technology, it becomes possible to interconnect machines with the mobile communication technology. M2M communication has appeared on the market in around 2002, and has developed rapidly in the following years, becoming a focus of attention of many communication equipment manufacturers and telecommunication operators. At present, the number of machines in the world is significantly more than that of people, and thus an excellent market prospect for the M2M technology may be expected.

Study on a scenario of applying the M2M communication shows a potential market prospect of providing the M2M communication over a mobile network. However, as the M2M communication puts many new requirements on a system, in order to enhance the competitiveness of a mobile network in this respect, it is necessary to optimize an existing mobile network so as to support the M2M communication more efficiently.

The existing mobile communication network has been designed primarily for communication among humans, and therefore is not optimal for communication among machines and between a human and a machine. In addition, a key to successful deployment of the M2M communication is for an operator to be able to provide a low-cost M2M communication service.

In view of this, it is necessary to find a solution to a mobile network supporting the M2M communication, which can maximize reuse of an existing network to reduce impact of huge amount of M2M communications upon a mobile network and reduce complexity in operation and maintenance.

At present, there is an increasing competition in a telecommunication market, with decreasing rate and profit margin of the operator. A communication market based on people is going saturated, while the M2M communication is a brand-new opportunity for an operator.

To utilize a mobile network resource effectively, a 3rd Generation Partnership Project (3GPP) proposed a service of Machine Type Communication (MTC), that is, Machine to Machine (M2M) communication and Machine-to-Man communication, the scope of which service goes far beyond H2H (Human to Human) communication before. MTC differs completely from the existing H2H communication in aspects such as access control, billing, security, Quality of Service (QoS), a service mode and the like.

In a 3GPP Evolved Packet System (EPS) architecture, an EPS includes a core and a radio access network, such as a UMTS Universal Terrestrial Radio Access Network (UTRAN), an Evolved UTRAN (E-UTRAN), a GSM/EDGE Radio Access Network (GERAN). For example, an Evolved Packet Core (EPC) includes network elements such as a Mobility Management Entity (MME), a Serving Gateway (SGW), a Packet Data Network (PDN) Gateway (PGW). A GPRS core includes network elements such as a Serving GPRS Support Node (SGSN). The E-UTRAN includes an evolved Node B (eNB).

A basic requirement to an MTC system is to trigger an MTC equipment or equipment, a focus thereof being as follows. In order to control communication of an MTC equipment, a possible way to communicate is to initiate a poll by an MTC server. For communication initiated by an MTC equipment, sometimes the MTC server is required to poll MTC equipments for data. If inquiry by the MTC server fails or an IP address of an MTC equipment is not available, then the MTC server may establish communication with the MTC equipment by triggering the MTC equipment. If a network fails to trigger an MTC equipment, then the network reports to the MTC server the failure to trigger the MTC equipment. MTC- equipment triggering is implemented via control-plane signalling in 3GPP.

MTC-equipment triggering includes Mobile Originated (MO) and Mobile Terminating (MT) services, i.e., sending or receiving information by an MTC equipment.

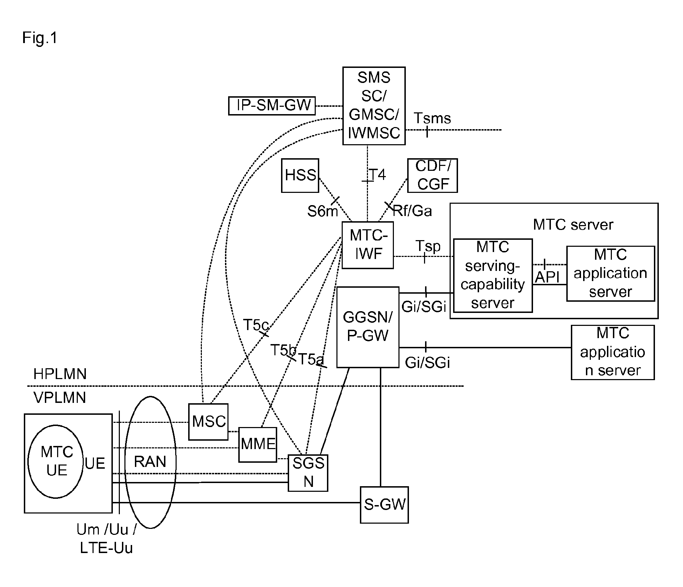

To implement effective transmission of a trigger request, solutions proposed include sending a trigger message via a Short Message Service (SMS), via control-plane signalling, or via user-plane data. For the sending the trigger message via control-plane signalling, an MTC server sends control-plane signalling including the trigger message to an MTC InterWorking Function (MTC-IWF); the MTC-IWF selects to send the trigger message to an MTC User Equipment (UE) through an interface T5 or T4. For the sending the trigger message via user-plane data, the MTC server sends the trigger message to the MTC-IWF; the MTC-IWF acquires an IP address of an MTC UE and sends the trigger message to the MTC UE via a user plane. MTC architecture in 3GPP is as shown in Fig.1, wherein on a user plane, an MTC Application Server connected to an MTC User communicates with an MTC Services Capability Server via an interface API, or communicates directly with a PGW/Gateway GPRS Support Node (GGSN) in a 3GPP network via an interface Gi/SGi; the MTC Services Capability Server communicates with the GGSN/PGW via the interface Gi/SGi; the GGSN/PGW communicates with an UE via a Radio Access Network (RAN); on a control plane, the MTC Services Capability Server sends control-plane signalling including trigger message to an MTC-IWF via an interface Tsp; the MTC-IWF sends the control-plane signalling to an MME, an SGSN, a Mobile Switching Center (MSC), or a Short Message Service Center (SMS-SC), and then the control-plane signalling is sent to the MTC UE via the RAN.

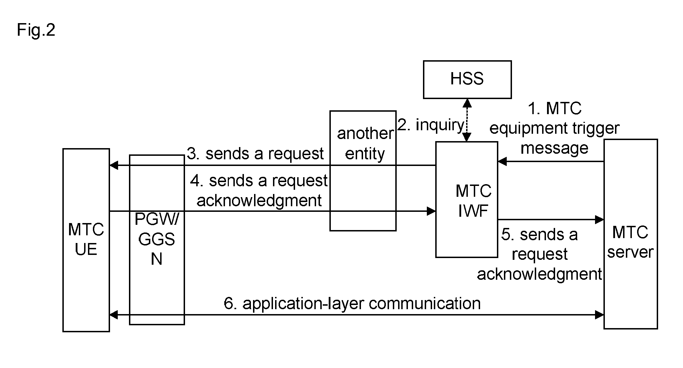

Fig.2 is a schematic diagram showing that an MTC server sends user-plane data including a trigger message for triggering an MTC equipment via an MTC-IWF, wherein the MTC server sends control-plane signalling including the trigger message directly to the MTC-IWF via an interface Tsp; the MTC-IWF sends the trigger message to an MTC UE via user-plane data. After receiving the trigger message, the MTC UE may communicate with the MTC server as indicated by the trigger message, such as establish a user-plane bearer, or communicate with the MTC server via an SMS.

Study and practice of related art shows that when an MTC-IWF selects to send a trigger message, there is no clear specification as to how a user-plane mode or a control-plane mode is selected as well as specifically through which interface the trigger message is sent in a control-plane mode.

### SUMMARY

In view of this, it is desired that embodiments of the present disclosure provide a method, system and equipment for sending a trigger message, capable of sending a trigger message.

To this end, a technical solution of the present disclosure is implemented as follows.

The present disclosure provides a method for sending a trigger message, including steps of:
authenticating, by a Machine Type Communication InterWorking Function (MTC-IWF), a Machine Type Communication (MTC) server upon receiving a trigger message from the MTC server;
after the MTC server is authenticated, obtaining, by the MTC-IWF, an Internet Protocol (IP) address of an MTC User Equipment (UE); when the IP address of the MTC UE is obtained, sending the trigger message to the MTC UE via a user plane network node equipment according to the obtained IP address of the MTC UE, or when the IP address of the MTC UE is not obtained, sending the trigger message to the MTC UE via a control plane interface; and
sending, by the MTC-IWF, a trigger confirm message to the MTC server.

In an embodiment of the method, the step of obtaining, by the MTC-IWF, an IP address of an MTC UE may include:
inquiring, by the MTC-IWF, about the IP address of the MTC UE locally or via a mapping table by: when the MTC UE has registered the IP address in the MTC-IWF, directly obtaining an IP address of the MTC-IWF using an external identification of the MTC UE; or inquiring about the IP address of the MTC UE via a separate mapping table using an external identification of the MTC UE.

In an embodiment of the method, the step of sending the trigger message to the MTC UE via a user plane network node equipment may include: sending, by the MTC-IWF, the trigger message as user plane data to the MTC UE via a Packet Data Network (PDN) Gateway (PGW) or a Gateway GPRS (General Packet Radio Service) Support Node (GGSN).

In an embodiment of the method, in the step of sending, by the MTC-IWF, a trigger confirm message to the MTC server, the trigger confirm message may be set by the MTC UE after the MTC UE receives the trigger message, and may be sent to the MTC server via the MTC-IWF.

In an embodiment of the method, the step of sending, when the IP address of the MTC UE is not obtained, the trigger message to the MTC UE via the control plane interface may include:
inquiring, by the MTC-IWF, about a T5 address of an MTC UE serving node, and sending the trigger message to at least one of a Mobility Management Entity (MME), a Serving GPRS (General Packet Radio Service) Support Node (SGSN), and a Mobile Switching Center (MSC) via an interface T5 according to the T5 address, such that
the MME/SGSN/MSC may send the trigger message to the MTC UE, and send the trigger confirm message to the MTC-IWF upon receiving a response of the MTC UE.

In an embodiment of the method, the step of sending the trigger message to at least one of an MME, an SGSN, and an MSC via an interface T5 may include:
sending, by the MTC-IWF, the trigger message to the SGSN via an interface T5a, and/or to the MME via an interface T5b, and/or to the MSC via an interface T5c,
wherein the trigger message may be sent over an interface T5 serially or in parallel as control signalling or a short message.

In an embodiment, the MME/SGSN/MSC may send the trigger message to the MTC UE by sending the trigger message received from the MTC-IWF to the MTC UE via control signalling or a short message.

In an embodiment, the step of sending, when the IP address of the MTC UE is not obtained, the trigger message to the MTC UE via the control plane interface may include:
inquiring, by the MTC-IWF, about a T5 address of an MTC UE serving node, and sending the trigger message to at least one of a Mobility Management Entity (MME), a Serving GPRS (General Packet Radio Service) Support Node (SGSN), and a Mobile Switching Center (MSC) via an interface T5 according to the T5 address; when the sending via the interface T5 fails or when it is selected to send the trigger message via an interface T4, sending the trigger message to the MTC UE via the interface T4.

In an embodiment, the method may further include: when it is selected to send the trigger message via an interface T4,
selecting, by the MTC-IWF, a Short Message Service Center (SMS-SC) to send the trigger message, and sending an acknowledgement to the MTC server after receiving the acknowledgement sent by the SMS-SC, such that
the SMS-SC may send the trigger message to the MTC UE via the MME/SGSN/MSC.

In an embodiment, the trigger confirm message may be sent to the MTC server by the SMS-SC via the MTC-IWF.

In an embodiment, the MTC UE may establish a Packet Data Network (PDN) connection with the MTC server and begin application-layer communication.

The disclosure further provides a system for sending a trigger message, including a Machine Type Communication InterWorking Function (MTC-IWF), a user plane network node equipment, a control plane interface, and a Machine Type Communication (MTC) User Equipment (UE), wherein
the MTC-IWF is configured for authenticating an MTC server upon receiving a trigger message sent by the MTC server; after the MTC server is authenticated, obtaining an Internet Protocol (IP) address of the MTC UE; when the IP address of the MTC UE is obtained, sending the trigger message to the MTC UE via the user plane network node equipment according to the obtained IP address of the MTC UE, or when the IP address of the MTC UE is not obtained, sending the trigger message to the MTC UE via the control plane interface; and sending a trigger confirm message to the MTC server.

In an embodiment, the MTC UE may be configured for: setting the trigger confirm message upon receiving the trigger message; sending the trigger confirm message to the MTC server; establishing a Packet Data Network (PDN) connection with the MTC server; and performing application-layer communication.

In an embodiment, the user plane network node equipment may include a Packet Data Network (PDN) Gateway (PGW) or a Gateway GPRS (General Packet Radio Service) Support Node (GGSN); and the control plane interface may include an interface T5 and an interface T4.

The disclosure further provides a Machine Type Communication (MTC) User Equipment (UE), including a communicating unit and a setting unit, wherein
the communicating unit is configured for receiving a trigger message, sending a set trigger confirm message to an MTC server, establishing a Packet Data Network (PDN) connection with the MTC server, and performing application-layer communication; and
the setting unit is configured for setting the trigger confirm message after receiving the trigger message.

With a method, system and equipment for sending a trigger message provided by the disclosure, an MTC-IWF authenticates an MTC server upon receiving a trigger message sent by the MTC server; obtains, after the MTC server is authenticated, an IP address of an MTC UE; sends, when the IP address of the MTC UE is obtained, the trigger message to the MTC UE via a user plane network node equipment according to the obtained IP address of the MTC UE, or sends, when the IP address of the MTC UE is not obtained, the trigger message to the MTC UE via a control plane interface; and sends a trigger confirm message to the MTC server, such that it is possible to send a trigger message by an MTC-IWF, thereby determining a solution for sending a trigger message.

### BRIEF DESCRIPTION OF THE DRAWINGS

Fig.1 is a schematic diagram of MTC architecture in existing 3GPP;
Fig.2 is a schematic diagram illustrating that an MTC server sends user plane data containing an MTC equipment trigger message via an MTC-IWF;
Fig.3 is a flowchart of implementing a method for sending a trigger message according to the present disclosure;
Fig.4 is a flowchart of implementing a method for sending a trigger message according to Embodiment 1 of the present disclosure;
Fig.5 is a flowchart of implementing a method for sending a trigger message according to Embodiment 2 of the present disclosure;
Fig.6 is a flowchart of implementing a method for sending a trigger message according to Embodiment 3 of the present disclosure; and
Fig.7 is a diagram of a structure of a system for sending a trigger message according to the present disclosure.

### DETAILED DESCRIPTION

In embodiments of the disclosure, an MTC-IWF authenticates an MTC server upon receiving a trigger message sent by the MTC server; obtains, after the MTC server is authenticated, an IP address of an MTC UE; sends, when the IP address of the MTC UE is obtained, the trigger message to the MTC UE via a user plane network node equipment according to the obtained IP address of the MTC UE, or sends, when the IP address of the MTC UE is not obtained, the trigger message to the MTC UE via a control plane interface; and sends a trigger confirm message to the MTC server.

The present disclosure is elaborated below with reference to drawings and specific embodiments.

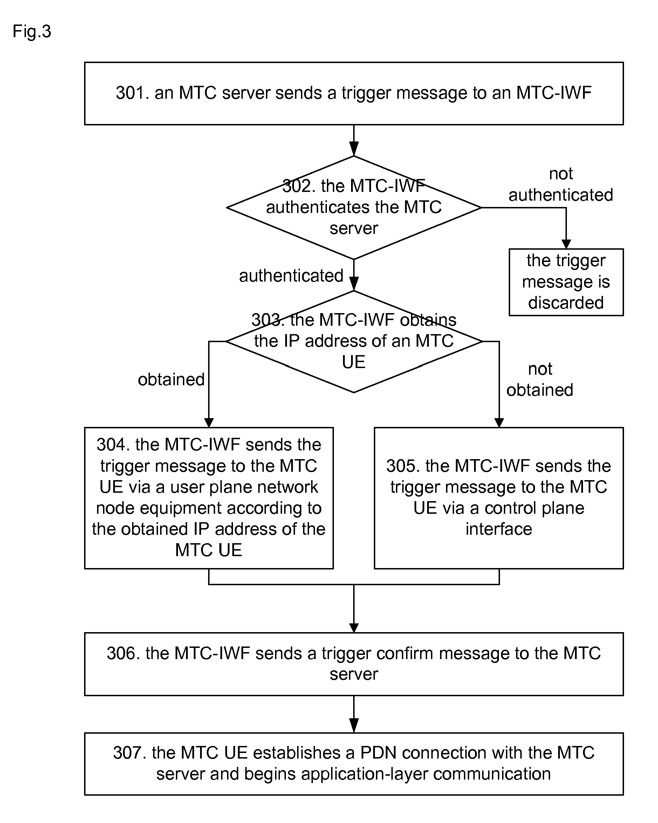

The present disclosure provides a method for sending a trigger message. Fig.3 is a flowchart of implementing a method for sending a trigger message according to the present disclosure. As shown in Fig.3, the method includes steps as follows.

In Step 301, an MTC server sends a trigger message to an MTC-IWF.

Specifically, the MTC server may inquire, using an external identification ext-ID of an MTC UE, about the IP address of the MTC-IWF from a Domain Name System (DNS), and send the trigger message to the MTC-IWF via an interface Tsp according to the IP address.

In Step 302, the MTC-IWF authenticates the MTC server; if the MTC serve is authenticated, step 303 is performed, or if the MTC serve is not authenticated, the trigger message is discarded.

Specifically, the MTC-IWF may authenticate the MTC server sending the trigger message upon receiving the trigger message; when the MTC server is valid, the MTC server is authenticated, and MTC-IWF may accept the trigger message and perform step 303; or when the MTC server is invalid, the MTC server is not authenticated, and the trigger message may be discarded by the MTC-IWF and the MTC-IWF may send the MTC server a not-authenticated indication with a reason, and the flow ends.

In Step 303, the MTC-IWF obtains the IP address of an MTC UE; and when the IP address is obtained, step 304 may be performed, or when the IP address is not obtained, step 305 may be performed.

Specifically, the MTC-IWF may inquire about the IP address of the MTC UE locally or via a mapping table; when the MTC UE has registered the IP address in the MTC-IWF, the MTC-IWF may directly obtain an IP address of the MTC-IWF using an external identification of the MTC UE; or the MTC-IWF may inquire about the IP address of the MTC UE via a separate mapping table using an external identification of the MTC UE.

If the MTC-IWF obtains the IP address of the MTC UE, the step 304 may be performed; or if the IP address of the MTC UE cannot be obtained by the MTC-IWF, the step 305 may be performed.

In Step 304, the MTC-IWF sends the trigger message to the MTC UE via a user plane network node equipment according to the obtained IP address of the MTC UE.

The MTC-IWF may send the trigger message to the MTC UE via the user plane network node equipment according to the obtained IP address of the MTC UE. The MTC-IWF may send the trigger message to the MTC UE via the user plane network node equipment specifically by sending the trigger message as user plane data to the MTC UE via a PGW or a GGSN.

In Step 305, the MTC-IWF sends the trigger message to the MTC UE via a control plane interface.

Specifically, when the IP address of the MTC UE cannot be obtained by the MTC-IWF, the trigger message cannot be sent via a user plane, and is thus sent via a control plane interface including an interface T5 and an interface T4. Specifically, the MTC-IWF may inquire about the address of an MTC UE serving node T5 via a Home Subscriber Server (HSS), and send the trigger message to the MTC UE via the interface T5 according to the address of the T5; if it fails to send the trigger message via the interface T5 or the MTC-IWF selects to send the trigger message via an interface T4, the MTC-IWF may inquire about the address of an MTC UE serving node T4 via an HSS, and send the trigger message to the MTC UE via the interface T4 according to the address of the T4.

In Step 306, the MTC-IWF sends a trigger confirm message to the MTC server.

In Step 307, the MTC establishes a PDN connection with the MTC server and begins application-layer communication, and the flow ends.

### Embodiment 1

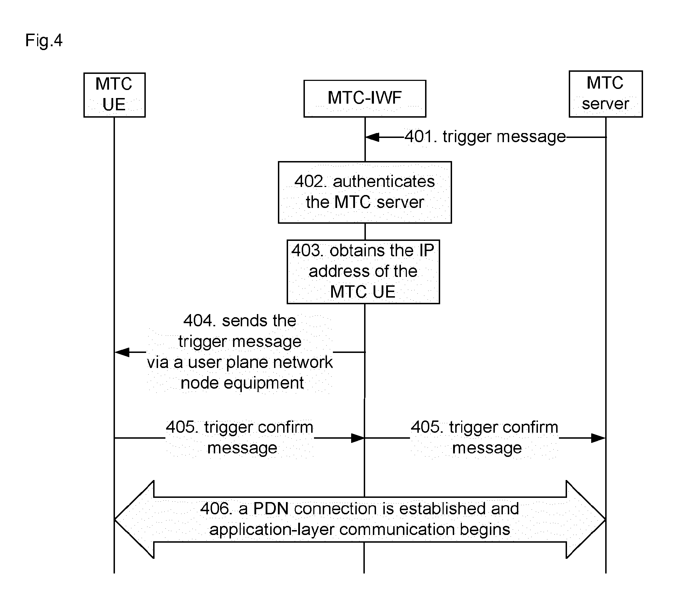

Fig.4 is a flowchart of implementing a method for sending a trigger message according to Embodiment 1 of the present disclosure for a scenario where the MTC-IWF obtains the IP address of the MTC UE and sends the trigger message via a user plane. As shown in Fig.4, the method may include steps as follows.

In Step 401, an MTC server may send a trigger message to an MTC-IWF.

Specifically, the MTC server may set content of the trigger message, inquire, using an external identification ext-ID of an MTC UE, about the IP address of the MTC-IWF from a DNS, and send the trigger message to the MTC-IWF via an interface Tsp according to the IP address.

In Step 402, the MTC-IWF may authenticate the MTC server; and when the MTC server is authenticated, the step 303 may be performed, or when the MTC server is not authenticated, the trigger message may be discarded.

Specifically, the MTC-IWF may authenticate the MTC server sending the trigger message upon receiving the trigger message; when the MTC server is valid, the MTC server is authenticated, and MTC-IWF may accept the trigger message, and perform step 403; or when the MTC server is invalid, the MTC server is not authenticated, and the trigger message may be discarded by the MTC-IWF, and the flow ends.

In Step 403, the MTC-IWF may obtain the IP address of an MTC UE;

Specifically, the MTC-IWF may inquire about the IP address of the MTC UE locally or via a mapping table; when the MTC UE has registered the IP address in the MTC-IWF, the MTC-IWF may directly obtain an IP address of the MTC-IWF using an external identification of the MTC UE; or the MTC-IWF may inquire about the IP address of the MTC UE via a separate mapping table using an external identification of the MTC UE.

In Step 404, the MTC-IWF may send the trigger message to the MTC UE via a user plane network node equipment according to the obtained IP address of the MTC UE;

The MTC-IWF may send the trigger message to the MTC UE via the user plane network node equipment according to the obtained IP address of the MTC UE. The MTC-IWF may send the trigger message to the MTC UE via the user plane network node equipment specifically by sending the trigger message as user plane data to the MTC UE via a PGW or a GGSN.

In Step 405, the MTC UE may set a trigger confirm message upon receiving the trigger message, and sends the trigger confirm message to the MTC server via the MTC-IWF.

In Step 406, a PDN connection may be established and application-layer communication may begin between the MTC UE and the MTC server.

Specifically, a PDN connection may be established and application-layer communication may begin between the MTC UE and the MTC server, and the flow ends, wherein by the application-layer communication, it means that the trigger message includes an application ID, and the MTC UE may identify, via the application ID, an application to be triggered, and activate the application to communicate with the MTC server.

### Embodiment 2

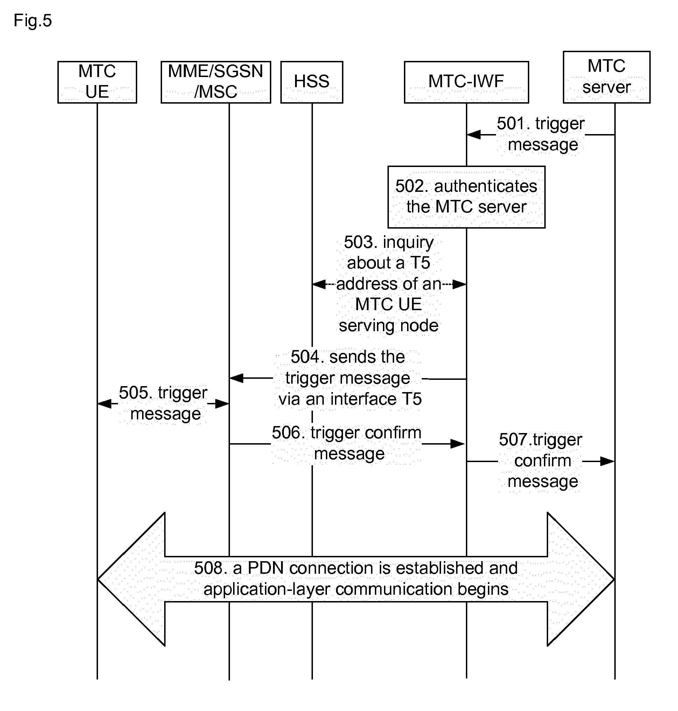

Fig.5 is a flowchart of implementing a method for sending a trigger message according to Embodiment 2 of the present disclosure for a scenario where the MTC-IWF does not obtain the IP address of the MTC UE and sends the trigger message via an interface T5. As shown in Fig.5, the method may include steps as follows.

In Step 501, an MTC server may send a trigger message to an MTC-IWF.

Specifically, the MTC server may set content of the trigger message, inquire, using an external identification ext-ID of an MTC UE, about the IP address of the MTC-IWF from a DNS, and send the trigger message to the MTC-IWF via an interface Tsp according to the IP address.

In Step 502, the MTC-IWF may authenticate the MTC server; and when the MTC server is authenticated, step 503 may be performed, or when the MTC server is not authenticated, the trigger message may be discarded.

Specifically, the MTC-IWF may authenticate the MTC server sending the trigger message upon receiving the trigger message; when the MTC server is valid, the MTC server is authenticated, and MTC-IWF may accept the trigger message, and perform step 503; or when the MTC server is invalid, the MTC server is not authenticated, and the trigger message may be discarded by the MTC-IWF, and the flow ends.

In Step 503, the MTC-IWF may inquire about the T5 address of an MTC UE serving node.

Specifically, the MTC-IWF may inquire, using an external identification of the MTC UE, about the T5 address of an MTC UE serving node via an HSS. The MTC UE serving node may be one the MTC UE registers to; the MTC UE stays in the service range of this serving node. A serving node may include an MME, an SGSN or an MSC.

In Step 504, the MTC-IWF may send the trigger message to an MME/SGSN/MSC via an interface T5.

Specifically, the MTC-IWF may send the trigger message to the SGSN via an interface T5a, and/or to the MME via an interface T5b, and/or to the MSC via an interface T5c, where the trigger message may be sent over an interface T5 serially or in parallel; in addition, when it is indicated in the trigger message that T5 triggering is sent for once, the MTC-IWF may not be required to store the sent trigger message. The trigger message may be sent via control signalling or a short message.

In Step 505, the MME/SGSN/MSC may send the trigger message to the MTC UE.

Specifically, the MME/SGSN/MSC may send the MTC UE the trigger message received from the MTC-IWF via control signalling or a short message, where the control signalling may be NAS signalling, and the short message may include indication of the short message as a trigger message.

In Step 506, after receiving a response sent by the MTC UE, the MME/SGSN/MSC may send a trigger confirm message to the MTC-IWF.

Specifically, after receiving the response of the MTC UE, the MME/SGSN/MSC may generate the trigger confirm message, and sends the trigger confirm message to the MTC-IWF, where when the MTC-IWF fails to send the trigger message via the interface T5, and it is indicated in the trigger message that T5 triggering is not single-time triggering, the MME/SGSN/MSC may set a message waiting identification.

In Step 507, the MTC-IWF may send the trigger confirm message to the MTC server.

Specifically, the MTC-IWF may forward the received trigger confirm message to the MTC server, and the MTC server may further communicate with the MTC UE.

In Step 508, a PDN connection may be established and application-layer communication may begin between the MTC UE and the MTC server.

Specifically, a PDN connection may be established and application-layer communication may begin between the MTC UE and the MTC server, and the flow ends, where by the application-layer communication, it means that the trigger message includes an application ID, and the MTC UE may identify, via the application ID, an application to be triggered, and activate the application to communicate with the MTC server.

### Embodiment 3

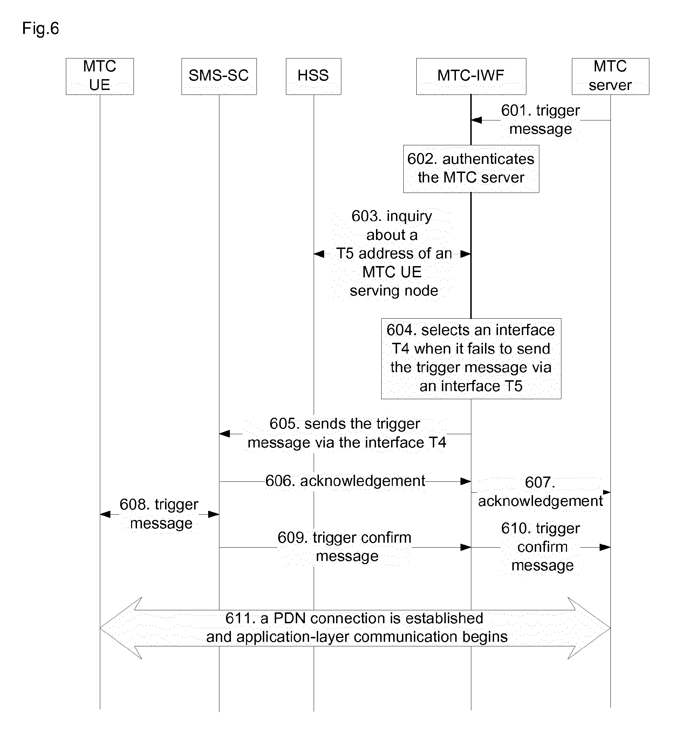

Fig.6 is a flowchart of implementing a method for sending a trigger message according to Embodiment 3 of the present disclosure for a scenario where the MTC-IWF does not obtain the IP address of the MTC UE and sends the trigger message via an interface T4. As shown in Fig.6, the method may include steps as follows.

In Step 601, an MTC server may send a trigger message to an MTC-IWF;

Specifically, the MTC server may set content of the trigger message, inquire, using an external identification ext-ID of an MTC UE, about the IP address of the MTC-IWF from a DNS, and send the trigger message to the MTC-IWF via an interface Tsp according to the IP address.

In Step 602, the MTC-IWF may authenticate the MTC server; and when the MTC server is authenticated, step step 603 may be performed, or when the MTC server is not authenticated, the trigger message may be discarded.

Specifically, the MTC-IWF may authenticate the MTC server sending the trigger message upon receiving the trigger message; when the MTC server is valid, the MTC server is authenticated, and MTC-IWF may accept the trigger message, and perform step 603; or when the MTC server is invalid, the MTC server is not authenticated, and the trigger message may be discarded by the MTC-IWF, and the flow ends.

In Step 603, the MTC-IWF may inquire about the T5 address of an MTC UE serving node.

Specifically, the MTC-IWF may inquire, using an external identification of the MTC UE, about the T5 address of an MTC UE serving node via an HSS. The MTC UE serving node may be registered by the MTC UE; the MTC UE stays in the service range of this serving node. A serving node may include an MME, an SGSN or an MSC.

In Step 604, the MTC-IWF may send the trigger message to an MME/SGSN/MSC via an interface T5; when the sending via the interface T5 fails or when it is selected to send the trigger message via an interface T4, the MTC-IWF may send the trigger message to the MTC UE via the interface T4.

Specifically, the MTC-IWF may send the trigger message to the MME/SGSN/MSC via an interface T5; when the sending via the interface T5 fails and the T5 sending is to be sent just for once, the trigger message may be sent to the MTC UE via the interface T4;

Or, the MTC-IWF may select to send the trigger message to the MTC UE via the interface T4 according to information found by inquiry and information such as a local operation strategy.

In Step 605, when it is selected to send the trigger message via an interface T4, the MTC-IWF may select an SMS-SC to send the trigger message.

Specifically, when the MTC-IWF selects to send the trigger message via an interface T4, the MTC-IWF first has to select a proper SMS-SC for sending the trigger message; after the SMS-SC is selected, the MTC-IWF may convert the trigger message into an MT SMS and send it to the selected SMS-SC.

In Step 606, the SMS-SC may send an acknowledgement to the MTC-IWF.

Specifically, after receiving the trigger message, the SMS-SC may send the MTC-IWF an acknowledgement for notifying the MTC-IWF that the SMS-SC has stored the trigger message.

In Step 607, the MTC-IWF may send an acknowledgement to the MTC server.

Specifically, after receiving the acknowledgement sent by the SMS-SC, the MTC-IWF may send the MTC server an acknowledgment for notifying the MTC server that the MTC-IWF has accepted the trigger message and is about to send the trigger message to the MTC UE.

In Step 608, the SMS-SC may send the trigger message to the MTC UE via the MME/SGSN/MSC.

Specifically, the SMS-SC may send, according to an area where the MTC UE registers, the trigger message received from the MTC-IWF to the MME/SGSN/MSC, and after receiving the trigger message, the MME/SGSN/MSC may forward the trigger message to the MTC UE.

In Step 609, the SMS-SC may send a trigger confirm message to the MTC-IWF.

Specifically, after receiving the trigger confirm message sent by the MME/SGSN/MSC, the SMS-SC may forward the trigger confirm message to the MTC-IWF for notifying the MTC-IWF that the target MTC UE has received the trigger message.

In Step 610, the MTC-IWF may send a trigger confirm message to the MTC server; and the MTC server may further establish a PDN connection and communicate with the MTC UE.

In Step 611, a PDN connection may be established and application-layer communication may begin between the MTC UE and the MTC server.

Specifically, a PDN connection may be established and application-layer communication may begin between the MTC UE and the MTC server, and the flow ends, where by the application-layer communication, it means that the trigger message includes an application ID, and the MTC UE may identify, via the application ID, an application to be triggered, and activate the application to communicate with the MTC server.

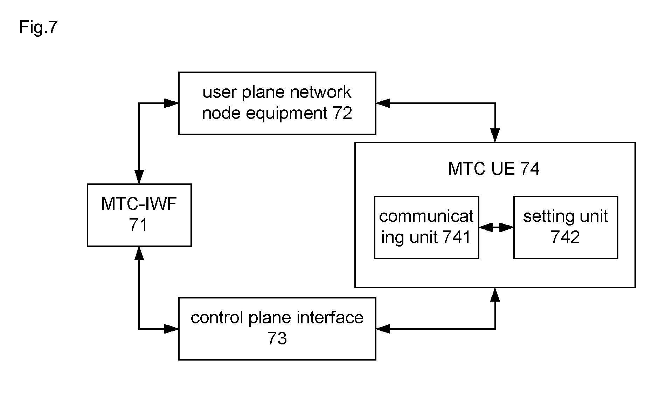

To implement the aforementioned method, the present disclosure further provides a system for sending a trigger message. Fig.7 is a diagram of a structure of a system for sending a trigger message according to the present disclosure. As shown in Fig.7, the system includes an MTC-IWF 71, a user plane network node equipment 72, a control plane interface 73, and an MTC UE 74.

The MTC-IWF 71 is configured for authenticating an MTC server upon receiving a trigger message sent by the MTC server; after the MTC server is authenticated, obtaining an IP address of the MTC UE; when the IP address of the MTC UE is obtained, sending the trigger message to the MTC UE 74 via the user plane network node equipment 72 according to the obtained IP address of the MTC UE, or when the IP address of the MTC UE is not obtained, sending the trigger message to the MTC UE 74 via the control plane interface 73; and sending a trigger confirm message to the MTC server.

The MTC UE 74 may be configured for: setting the trigger confirm message upon receiving the trigger message; sending the trigger confirm message to the MTC server; establishing a PDN connection with the MTC server; and performing application-layer communication.

The user plane network node equipment may include a PGW or a GGSN; the control plane interface may include an interface T5 and an interface T4.

The MTC UE 74 may further include a communicating unit 741 and a sending unit 742, wherein
the communicating unit 741 may be configured for receiving a trigger message, sending a set trigger confirm message to an MTC server, establishing a PDN connection with the MTC server, and performing application-layer communication; and
the setting unit 742 may be configured for setting the trigger confirm message after receiving the trigger message.

The IP address of the MTC UE may be obtained by the MTC-IWF 71 locally or via a mapping table by: when the MTC UE has registered the IP address in the MTC-IWF, directly obtaining an IP address of the MTC-IWF using an external identification of the MTC UE; or inquiring about the IP address of the MTC UE via a separate mapping table using an external identification of the MTC UE .

When the IP address of the MTC UE is not obtained, the trigger message may be sent to the MTC UE 74 by the MTC-IWF 71 via the control plane interface by: inquiring about a T5 address of an MTC UE serving node, and sending the trigger message to an MME/SGSN/MSC via an interface T5 according to the T5 address, such that the MME/SGSN/MSC sends the trigger message to the MTC UE, and sends the trigger confirm message to the MTC-IWF upon receiving a response of the MTC UE; the MTC-IWF sends the trigger confirm message to the MTC server.

When the IP address of the MTC UE is not obtained, the trigger message may be sent to the MTC UE 74 by the MTC-IWF 71 via the control plane interface by: inquiring about a T5 address of an MTC UE serving node, and sending the trigger message to an MME/SGSN/MSC via an interface T5 according to the T5 address; sending, when the sending via the interface T5 fails or when it is selected to send the trigger message via an interface T4, the trigger message to the MTC UE via the interface T4; when it is selected to send the trigger message via an interface T4, the MTC-IWF may select an SMS-SC to send the trigger message, the SMS-SC may send an acknowledgement to the MTC-IWF, the MTC-IWF may send an acknowledgement to the MTC server, the SMS-SC may send the trigger message to the MTC UE via the MME/SGSN/MSC.

What described are merely embodiments of the disclosure and are not intended to limit the scope of the disclosure, and any modification, equivalent substitution, improvement and the like made within the spirit and principle of the disclosure shall fall in the scope of protection of the present disclosure.

## Claims

1. A method for sending a trigger message, comprising steps of:
authenticating, by a Machine Type Communication InterWorking Function (MTC-IWF), a Machine Type Communication (MTC) server upon receiving a trigger message from the MTC server;
after the MTC server is authenticated, obtaining, by the MTC-IWF, an Internet Protocol (IP) address of an MTC User Equipment (UE); when the IP address of the MTC UE is obtained, sending the trigger message to the MTC UE via a user plane network node equipment according to the obtained IP address of the MTC UE, or when the IP address of the MTC UE is not obtained, sending the trigger message to the MTC UE via a control plane interface; and
sending, by the MTC-IWF, a trigger confirm message to the MTC server.

2. The method according to claim 1, wherein the step of obtaining, by the MTC-IWF, an IP address of an MTC UE comprises:
inquiring, by the MTC-IWF, about the IP address of the MTC UE locally or via a mapping table by: when the MTC UE has registered the IP address in the MTC-IWF, directly obtaining an IP address of the MTC-IWF using an external identification of the MTC UE; or inquiring about the IP address of the MTC UE via a separate mapping table using an external identification of the MTC UE.

3. The method according to claim 2, wherein the step of sending the trigger message to the MTC UE via a user plane network node equipment comprises: sending, by the MTC-IWF, the trigger message as user plane data to the MTC UE via a Packet Data Network (PDN) Gateway (PGW) or a Gateway GPRS (General Packet Radio Service) Support Node (GGSN).

4. The method according to claim 3, wherein in the step of sending, by the MTC-IWF, a trigger confirm message to the MTC server, the trigger confirm message is set by the MTC UE after the MTC UE receives the trigger message, and is sent to the MTC server via the MTC-IWF.

5. The method according to claim 2, wherein the step of sending, when the IP address of the MTC UE is not obtained, the trigger message to the MTC UE via the control plane interface comprises:
inquiring, by the MTC-IWF, about a T5 address of an MTC UE serving node, and sending the trigger message to at least one of a Mobility Management Entity (MME), a Serving GPRS (General Packet Radio Service) Support Node (SGSN), and a Mobile Switching Center (MSC) via an interface T5 according to the T5 address, such that
the MME/SGSN/MSC sends the trigger message to the MTC UE, and sends the trigger confirm message to the MTC-IWF upon receiving a response of the MTC UE.

6. The method according to claim 5, wherein the step of sending the trigger message to at least one of an MME, an SGSN, and an MSC via an interface T5 comprises:
sending, by the MTC-IWF, the trigger message to the SGSN via an interface T5a, and/or to the MME via an interface T5b, and/or to the MSC via an interface T5c,
wherein the trigger message is sent over an interface T5 serially or in parallel as control signalling or a short message.

7. The method according to claim 5, wherein the MME/SGSN/MSC sends the trigger message to the MTC UE by sending the trigger message received from the MTC-IWF to the MTC UE via control signalling or a short message.

8. The method according to claim 2, wherein the step of sending, when the IP address of the MTC UE is not obtained, the trigger message to the MTC UE via the control plane interface comprises:
inquiring, by the MTC-IWF, about a T5 address of an MTC UE serving node, and sending the trigger message to at least one of a Mobility Management Entity (MME), a Serving GPRS (General Packet Radio Service) Support Node (SGSN), and a Mobile Switching Center (MSC) via an interface T5 according to the T5 address; when the sending via the interface T5 fails or when it is selected to send the trigger message via an interface T4, sending the trigger message to the MTC UE via the interface T4.

9. The method according to claim 8, further comprising: when it is selected to send the trigger message via an interface T4,
selecting, by the MTC-IWF, a Short Message Service Center (SMS-SC) to send the trigger message, and sending an acknowledgement to the MTC server after receiving the acknowledgement sent by the SMS-SC, such that
the SMS-SC sends the trigger message to the MTC UE via the MME/SGSN/MSC.

10. The method according to claim 9, wherein the trigger confirm message is sent to the MTC server by the SMS-SC via the MTC-IWF.

11. The method according to claim 1, wherein the MTC UE establishes a Packet Data Network (PDN) connection with the MTC server and begins application-layer communication.

12. A system for sending a trigger message, comprising a Machine Type Communication InterWorking Function (MTC-IWF), a user plane network node equipment, a control plane interface, and a Machine Type Communication (MTC) User Equipment (UE), wherein
the MTC-IWF is configured for authenticating an MTC server upon receiving a trigger message sent by the MTC server; after the MTC server is authenticated, obtaining an Internet Protocol (IP) address of the MTC UE; when the IP address of the MTC UE is obtained, sending the trigger message to the MTC UE via the user plane network node equipment according to the obtained IP address of the MTC UE, or when the IP address of the MTC UE is not obtained, sending the trigger message to the MTC UE via the control plane interface; and sending a trigger confirm message to the MTC server.

13. The system according to claim 12, wherein the MTC UE is configured for: setting the trigger confirm message upon receiving the trigger message; sending the trigger confirm message to the MTC server; establishing a Packet Data Network (PDN) connection with the MTC server; and performing application-layer communication.

14. The system according to claim 12, wherein
the user plane network node equipment comprises a Packet Data Network (PDN) Gateway (PGW) or a Gateway GPRS (General Packet Radio Service) Support Node (GGSN); and
the control plane interface comprises an interface T5 and an interface T4.

15. A Machine Type Communication (MTC) User Equipment (UE), comprising a communicating unit and a setting unit, wherein
the communicating unit is configured for receiving a trigger message, sending a set trigger confirm message to an MTC server, establishing a Packet Data Network (PDN) connection with the MTC server, and performing application-layer communication; and
the setting unit is configured for setting the trigger confirm message after receiving the trigger message.
